# EUROPÄISCHE PATENTSCHRIFT

(11) **EP 1 995 039 B1**
(45) Veröffentlichungstag und Bekanntmachung des Hinweises auf die Patenterteilung: **26.10.2011**
(21) Anmeldenummer: 08005426.5
(22) Anmeldetag: 22.03.2008
(51) Int. Cl.: B29C 51/26

(54) **Spannrahmen für eine Thermoformanlage**
Frame for thermoforming assembly
Cadre de serrage pour une installation de thermoformage

(30) Priorität: 22.05.2007 DE 102007023755
(43) Veröffentlichungstag der Anmeldung: 26.11.2008
(73) Patentinhaber: FRIMO Group GmbH, 49504 Lotte (DE)
(72) Erfinder: Feichtenschlager, Eric, 5230 Mattighofen (AT); Pischinger, Karl-Heinz, 83416 Saaldorf/Surheim (DE)
(74) Vertreter: HOFFMANN EITLE

(56) Entgegenhaltungen:
- DE-C1- 19 814 615
- DE-C1- 19 941 065
- DE-U1- 8 515 381
- JP-A- 11 129 324
- US-B1- 6 361 304

## Beschreibung

### Technisches Gebiet

Die Erfindung betrifft einen Spannrahmen für eine Thermoformanlage, umfassend einen absenkbaren, in seiner Spannbreite und Spannlänge veränderlichen Rahmen mit den Innenrand umschließenden Spannzangen mit in einer gemeinsamen Ebene liegenden Spannbacken zum randseitigen Festlegen eines in die Rahmenöffnung eingefügten Flächengebildes. Derartige Flächengebilde bestehen aus thermisch zumindest einmal erweichbaren Folien, die beispielsweise als Abdeckungen auf Armaturentafeln oder Innenraumverkleidungen in Kraftfahrzeugen zur Anwendung gelangen.

Das Dokument DE-C-1 994 1065 offenbart einen Spannrahmen gemäß dem Oberbegriff des Anspruchs 1.

### Stand der Technik

Ein Spannrahmen der eingangs genannten Art ist aus der US 3.287.765 A1 bekannt. Zur Festlegung der zu verformenden Folie gelangen dabei Spannzangen zur Anwendung. Diese sind relativ schmal ausgebildet und werden in Abhängigkeit von der flächenmäßigen Ausdehnung der zu verformenden Folie in kleinen Abständen von einander und in der jeweils erforderlichen Stückzahl lösbar einerseits an dem Rahmen und andererseits an der zu verformenden Folie oder Platte festgelegt, um die Folie oder Platte im Bereich des Randes so gut wie möglich festzulegen. Die Anbringung der Spannzangen und der Folie ist mit einem erheblichen Arbeitsaufwand verbunden sowie mit dem Problem, dass, je nach Größe der Folie, stets mehr oder weniger große Freiräume zwischen den benachbarten Spannzangen offen bleiben, wodurch es nicht möglich ist, die Folie mit einem Vakuum an ein Werkzeug anzusaugen oder mit Druckluft abzustützen.

### Darstellung der Erfindung

Der Erfindung liegt die Aufgabe zu Grunde, eine solche Vorrichtung derart weiter zu entwickeln, dass sich die Größe des Spannrahmens schnell und stufenlos verstellen und eine zu verformende Folie oder Platte mit Vakuum an ein Werkzeug angesogen oder durch ein Druckluftpolster abgestützt werden kann.

Diese Aufgabe wird erfindungsgemäß bei einer Vorrichtung nach dem Oberbegriff durch die kennzeichnenden Merkmale von Anspruch 1 gelöst. Auf vorteilhafte Weiterbildungen nehmen die Unteransprüche Bezug.

Erfindungsgemäß ist es somit vorgesehen, dass die Spannzangen zumindest anteilig als durchgehend ausgebildete Klemmschienen ausgebildet sind mit einer Klemmlänge, die zumindest der Spannbreite Sb bzw. Spannlänge SI entspricht. Dadurch ist die Anbringung an dem Rahmen wesentlich vereinfacht und der Arbeitsaufwand in Bezug auf die Anbringung und Entnahme einer zu verformenden Folie oder Platte deutlich reduziert. Außerdem lässt sich durch die gasdichte Ausbildung der Klemmschienen ein Vakuum auf die Folie übertragen und die Folie bei Bedarf durch ein Luftkissen abstützen. Sie kann dadurch wesentlich größer ausgebildet sein als bisher, was es begünstigt, Mehrfachwerkzeuge zu verwenden.

Nach einer vorteilhaften Ausgestaltung ist es vorgesehen, das mindestens eine Klemmschiene stirnseitig durch zwei andere Klemmschienen begrenzt, als ausziehbare Teleskopklemmschiene verlänger- und verkürzbar ausgebildet und dadurch hinsichtlich ihrer Länge an die jeweiligen Spannbreite Sb bzw. Spannlänge SI zwischen den beiden anderen Klemmschienen anpassbar ist.

Die Erfindung lässt dabei je nach Art der zur Anwendung gelangenden Thermoformmaschine viele Gestaltungsmöglichkeiten offen.

Es ist z.B. möglich, den Spannrahmen so auszubilden, dass zwei Klemmschienen, die im rechten Winkel zueinander angeordnet sind, starr montiert sind, wobei eine Klemmschiene von starrer Länge und querverschiebbar gelagert ist und die verbleibende Klemmschiene als Teleskopschiene längenveränderlich und zwischen einer starr montierten Klemmschiene und der querverschiebbaren Klemmschiene angeordnet ist.

Ferner besteht die Möglichkeit, zwei sich parallel zu einander erstreckende Klemmschienen starr zu lagern und zwischen zwei querverschiebbaren Klemmschienen von starrer Länge anzubringen.

Ferner besteht die Möglichkeit, eine Klemmschiene starr zu lagern, eine sich parallel dazu erstreckende Klemmschiene querverschiebbar und die sich quer dazu erstreckenden Klemmschienen als Teleskopklemmschienen auszubilden.

Unabhängig von der spezifischen Ausbildung und Lagerung ist es in jedem Fall von besonderer Bedeutung, dass die Klemmschienen in sich gasdicht ausgebildet und im Fall der Teleskopschienen im Bereich der Übergangszone von der einen auf die andere Schiene gasdicht aneinander anliegen.

Zweckmäßig umfasst hierzu die Teleskopklemmschiene ein erstes Paar und ein zweites Paar von Klemmleisten, die paarweise parallel zu ihrer Längsrichtung ineinander verschiebbar geführt sind, dass jedes Paar der Klemmleisten eine Oberleiste und eine Unterleiste umfasst und dass die Oberleisten nur gemeinsam von den Unterleisten entfernbar und an diese annäherbar sind. Unabhängig von der jeweiligen Länge gelingt es dadurch, die zu ergreifende Folie nach dem Einlegen problemlos randseitig gasdicht, d.h. ohne Lücke, festzulegen. Die Ober- und die Unterleisten sämtlicher Paare haben dazu Spannbacken, die, in der Ebene des einzuspannenden Flächengebildes betrachtet, hintereinanderliegend angeordnet sind.

Die Oberleisten sind um ein horizontales Lager der Unterleisten schwenkbar, um die Spannbacken voneinander zu entfernen oder aneinander anzunähern. Natürlich können die Spannbacken auch vertikal voneinander abgehoben werden, was allerdings einen etwas höheren Herstellaufwand erfordert. Die schwenkbare Ausbildung wird daher bevorzugt.

Die Oberleisten sind dabei zweckmäßig durch über die Länge verteilte Kolben- / Zylinderanordnungen der Unterleisten schwenkbar ausgebildet. Die Zylindereinheiten sind dabei zweckmäßig parallel zueinander mit einem druckbeaufschlagten Strömungsmittel versorgbar, zweckmäßig mit Druckluft.

Als vorteilhaft hat es sich bewährt, wenn wenigstens zwei Klemmschienen auf Schlitten festgelegt und in der Ebene des Flächengebildes senkrecht zur Längserstreckung der Klemmschienen vor- und zurückbewegbar sind. Die Klemmschienen können dabei parallel, aber auch senkrecht zu einander angeordnet sein.

Jeder Schlitten kann dabei durch Gewindespindeln motorisch verschiebbar ausgebildet sein, wobei die Gewindespindeln in einem den Rahmen tragenden Hilfsrahmen stationär gelagert sind.

Falls senkrecht zueinander verschiebbare Schlitten zur Anwendung gelangen, hat es sich als zweckmäßig bewährt, wenn die Schlitten durch separate Antriebe verschiebbar sind.

Falls parallel zueinander verschiebbare Schlitten zur Anwendung gelangen, ist es sinnvoll, wenn sie durch einen Zentralantrieb parallel zu einander verschiebbar sind.

Natürlich können auch alle Schlitten gemeinsam durch einen Zentralantrieb verstellbar ausgebildet sein. Die Verstellung gelingt dann besonders schnell, wenn die einzelnen Schlitten an beiden Enden Gewindebuchsen tragen und durch die darin eingreifenden Gewindespindeln gemeinsam verschiebbar sind. Denkbaren Verkantungen wird dadurch besser vorgebeugt.

Als vorteilhaft hat es sich erwiesen, wenn die Schlitten durch in dem Hilfsrahmen verschiebbare, vakuumdichte Platten gebildet sind und wenn die Platten durch Dichtungen gegenüber dem Hilfsrahmen abgedichtet sind. Trotz ihrer Verschiebbarkeit gelingt es dadurch problemlos, das für bestimmte Fertigungsschritte erwünschte Luftkissen oder Vakuum aufzubauen.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 bis 3 verschiede Bauformen des erfindungsgemäßen Spannrahmens in einer Ansicht von oben und als reine Prinzipdarstellung
Fig. 4 eine durchgehend ausgebildete Klemmschiene in quergeschnittener Darstellung
Fig. 5 eine Teleskopklemmschiene in quergeschnittener Darstellung
Fig. 6 eine Teleskopklemmschiene in der Draufsicht
Fig. 7 einen Spannrahmen in der Draufsicht, der mehrere Klemmschienen umfasst, die eine weitenveränderliche, rechteckige Rahmenöffnung umschließen.

### Ausführung der Erfindung

Der gezeigte Spannrahmen ist für eine Thermoformanlage bestimmt und gelangt in Verbindung damit zur Verwendung. Er umfasst einen absenkbaren, in seiner Spannbreite und Spannlänge veränderlichen Rahmen 1 mit den Innenrand umschließenden, durchgehend ausgebildeten Spannzangen, die in einer gemeinsamen Ebene liegende Spannbacke zum randseitigen Festlegen eines in die Rahmenöffnung 3 eingefügten Flächengebildes.

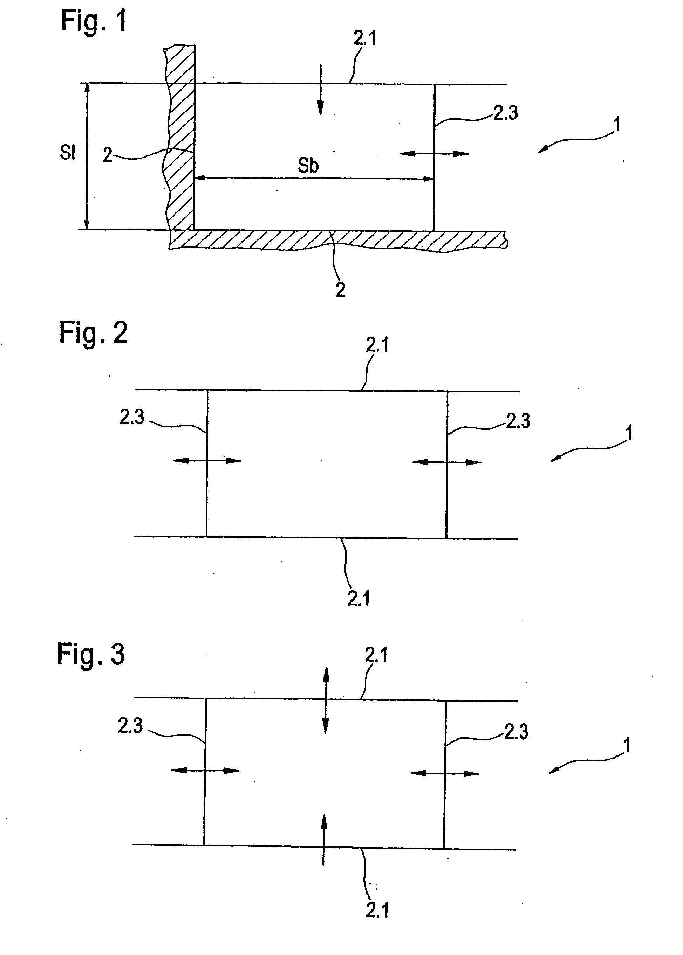

Die Spannzangen bestehen bei der Bauform nach Fig. 1 aus zwei starr festgelegten Klemmschienen 2, einer querbeweglichen Klemmschiene 2.1 von starrer Länge und einer längenveränderlichen, querbeweglichen Teleskopklemmschiene 2.3 zur Überbrückung des weitenveränderlichen Zwischenraumes zwischen der querverschiebbaren Klemmschiene 2.1 und der sich parallel dazu erstreckenden, starr festgelegten Klemmschiene 2.

Die Spannbreite Sb bzw. Spannlänge SI entspricht der Größe einer thermozuformenden Folie und die Teleskopschiene 2.3 ist hinsichtlich ihrer Spannlänge SI stirnseitig durch die beiden Klemmschienen 2, 2.1 begrenzt und an die jeweiligen Spannlänge SI bzw. Spannbreite Sb zwischen den beiden anderen Klemmschienen 2, 2.1 anpassbar, ohne dass sich luftdurchlässige Zwischenräume zwiechen den Klemmschienen 2, 2.1 ergeben.

Bei der Bauform nach Fig. 2 sind zwischen zwei starr festgelegten Klemmschienen 2.1 von starrer Länge zwei querbewegliche Klemmschienen von starrer Länge angebracht. Die Bauform eignet sich vor allem für die Verarbeitung von Endlosmaterial zu unterschiedlich breiten Formteilen aus einer Kunststofffolie oer -platte.

Die Bauform nach Fig. 3 ist besonders universell verwendbar und umfasst zwei quer verschiebbare Klemmschienen 2.1 von starrer Länge, zwischen denen zwei querverschiebbare Teleskopklemmschienen 2.3 von veränderlciher Länge angeordnet sind.

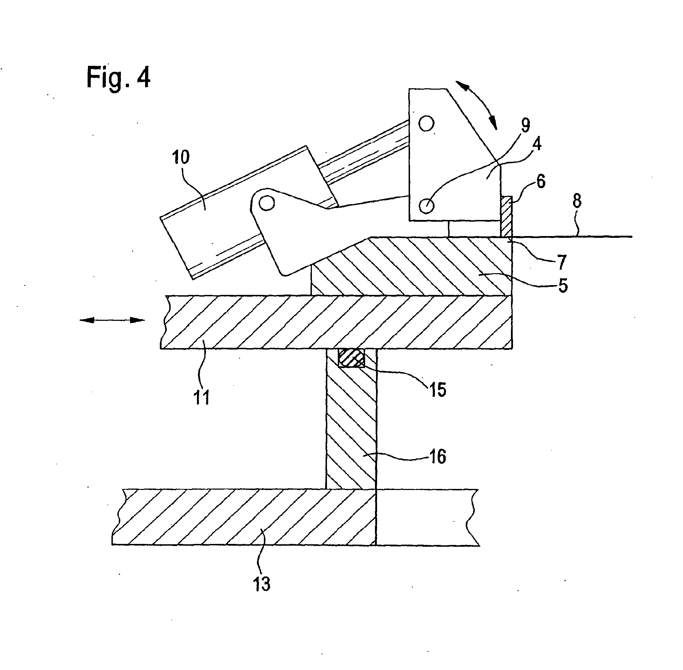

Eine beispielhafte Ausführung einer Klemmschiene 2.1 von starrer Länge wird nachfolgend an Hand der Fig. 4 erläutert:

Die Klemmschiene ist in quergeschnittener Darstellung gezeigt und auf einem Schlitten 11 montiert, der durch eine vakuumdichte Platte gebildet und einschließlich der Platte in der Zeichnungsebene nach rechts und links verschiebbar ist.

Die Platte ist in einem Hilfsrahmen 13 gelagert und gegenüber dem Hilfsrahmen durch eine Dichtleiste 16 und eine darin in eine Nut eingesetzte Dichtung 15 abgedichtet.

Die Klemmschiene umfasst eine Oberleiste 4 und eine Unterleiste 5, die durch ein Gelenk 9 mittels einer druckluftbeauschlagbaren Kolben-/Zylindereinheit schwenkbar verbunden sind, wodurch die als kontinuierlich durchgehend ausgebildeten, gasdichte Spannbacken 6, 7 voneinander entfernbar oder mit der einzuspannenden Folie 8 in Eingriff bringbar sind. Die Folie 8 ist dadurch von unten mit Druckluft abstützbar und unter Verwendugn von Vakuum nach unten an einen Formling ansaugbar.

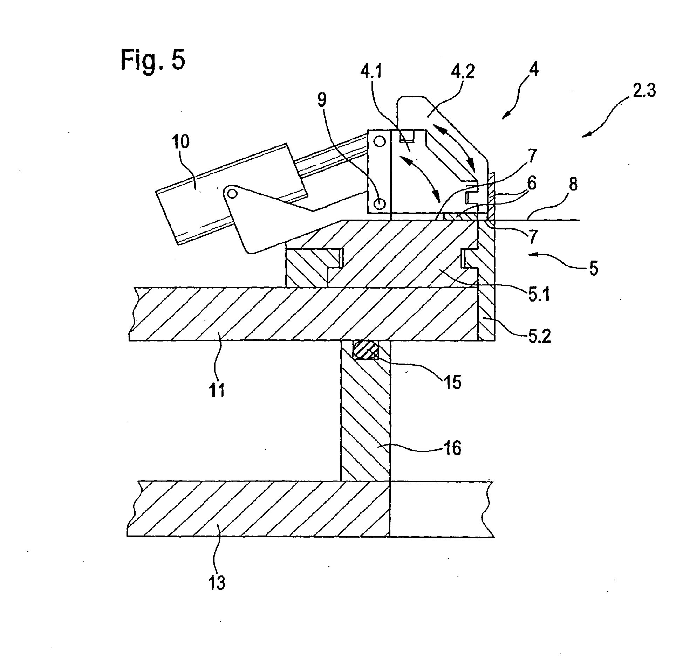

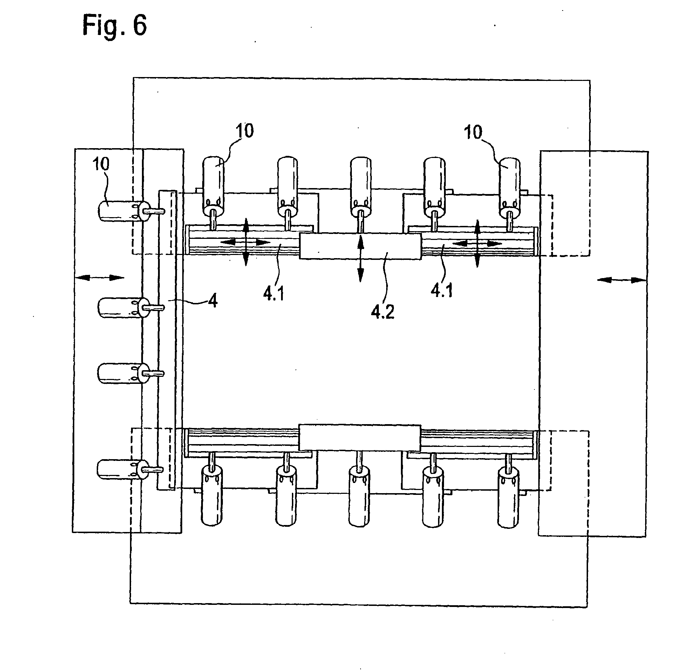

Die grundsätzliche Bauform einer Teleskopklemmschiene wird nachfolgend an Hand der Fig. 5 und Fig. 6 näher erläutert.

Der grundsätzliche Aufbau entspricht dem vorstehend beschriebenen. Abweichend sind oben und unten zwei Paar 4, 5 von Klemmleisten 4.1, 4.2; 5.1, 5.2 vorgesehen, die paarweise parallel zu ihrer Längsrichtung und senkrecht zur Zeichnungsebene ineinander verschiebbar geführt sind, wobei jedes Paar 4, 5 der Klemmleisten eine Oberleiste 4.1, 4.2 und eine Unterleiste 5.1 , 5.2 umfasst und wobei die Oberleisten 4.1, 4.2 nur gemeinsam von den Unterleisten 5.1, 5.2 entfernbar und an diese annäherbar sind. Dazu sind die Oberleisten 4.1, 4.2 und die Unterleisten 5.1, 5.2 paarweise durch Längsführungen vereint und nur in Längsrichtung ineinander verschiebbar, nicht jedoch in Querrichtung von einander trennbar. Die Oberleisten 4.1, 4.2 und die Unterleisten 5.1, 5.2 sind, bezogen auf den Rand des zu verformenden Flächengebildes bezogen, hintereinanderliegend angeordnet. Die bei ihrer Herstellung zur Anwendung gelangenden Profile können Strangpressprofile sein, bedarfsweise jedoch auch spanabhebend erzeugt sein. In Querrichtung sind die Profile jeweils gasdicht ausgebildet und gasdicht aneinander anliegend geführt. Die ausziehbaren Bestandteile der Ober- und Unterleisten sind so gestaltet, dass sich immer auf der ganzen Spannlänge eine durchgehende, gasdichte Anlageberührung des zu verformenden Flächengebildes 8 ergibt.

Die Ober- und die Unterleisten 4.1, 4.2, 5.1, 5.2 sämtlicher Paare 4, 5 haben Spannbacken 6, 7, die, in der Ebene des einzuspannenden Flächengebildes 8 betrachtet, hintereinanderliegend angeordnet sind. Sie können durch eine Betätigung der Kolben- /Zylindereinheit 10 wahlweise voneinander entfernt oder aneinander angenähert und gasdicht mit der Kunststofffolie 8 verpresst werden. Dazu sind die Oberleisten 4.1, 4.2 um ein horizontales Lager 9 der Unterleisten 5.1, 5.2 schwenkbar ausgebildet und mehrere Gruppen von parallel zu einander druckbeaufschlagbaren Kolben-/ Zylindereinheiten 10 möglichst gleichmäßig über die gesamte Länge der Teleskopklemmschiene verteilt angebracht, wie in Fig. 6 gezeigt. Beim Verkürzen oder Verlängern der Einspannlänge nähern sich die Gruppen aneinander an oder sie entfernen sich von einander.

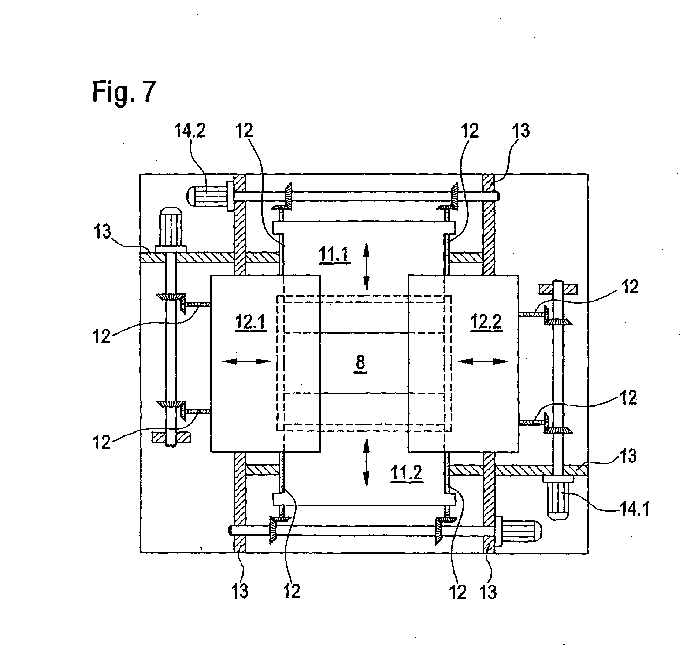

Fig. 7 zeigt eine Bauform, bei der zwei einander unter einem Winkel von 90 ° zugeordnete Paare von nicht gezeigten Klemmschienen auf Schlitten 11.1, 11.2; bzw. 12.1, 12.2 festgelegt und entsprechend Fig. 3 in der Ebene des Flächengebildes 8 senkrecht zu ihrer jeweiligen Längserstreckung vor- und zurückbewegbar sind.

Die Schlitten 11.1, 11.2; und 12.1, 12.2 sind durch Gewindespindeln 12 verschiebbar, wobei die Gewindespindeln 12 in einem den Rahmen 1 tragenden Hilfsrahmen 13 gelagert und mit den Schlitten 11.1, 11.2; und 12.1, 12.2 durch Gewindebuchsen verbunden sind.

Die senkrecht zueinander verschiebbaren Schlitten 11, 12 sind durch separate Antriebe 14.1, 14.2 verschiebbar. Bedarfsweise können auch die parallel zueinander verschiebbaren Schlitten 11.1, 11.2; 12.1, 12.2 und somit alle Schlitten durch einen Zentralantrieb verschiebbar sein.

Die Schlitten 11.1, 11.2, 12.1, 12.2 sind durch in dem Hilfsrahmen 13 verschiebbare, vakuumdichte Platten gebildet, wobei die Platten durch Dichtungen 15 und gegebenenfalls weitere Dichtleisten 16 gegenüber dem Hilfsrahmen 13 abgedichtet sind.

## Patentansprüche

1. Spannrahmen für eine Thermoformanlage, umfassend einen absenkbaren, in seiner Spannbreite und Spannlänge veränderlichen Rahmen (1) mit den Innenrand umschließenden Spannzangen mit in einer gemeinsamen Ebene liegenden Spannbacken zum randseitigen Festlegen eines in die Rahmenöffnung (3) eingefügten Flächengebildes, wobei die Spannzangen zumindest anteilig als durchgehend ausgebildete Klemmschienen . (2) ausgebildet sind mit einer Klemmlänge, die zumindest der Spannbreite Sb bzw. Spannlänge SI der zu verformenden Kunststofffolie oder -platte entspricht, dass mindestens eine Klemmschiene (2.1) stirnseitig durch zwei andere Klemmschienen begrenzt, als ausziehbare Teleskopklemmschiene (2.3) ausgebildet und hinsichtlich ihrer Länge an die jeweilige Spannbreite Sb bzw. Spannlänge SI zwischen den beiden stirnseitig angrenzenden, anderen Klemmschienen anpassbar ist, **dadurch gekennzeichnet, dass** die Teleskopklemmschiene (2.3) ein erstes Paar (4) und ein zweites Paar (5) von Klemmleisten umfasst, die paarweise parallel zu ihrer Längsrichtung ineinander verschiebbar geführt sind, dass jedes Paar (4, 5) der Klemmleisten eine Oberleiste (4.1, 4.2) und eine Unterleiste (5.1, 5.2) umfasst und dass die Oberleisten (4.1, 4.2) nur gemeinsam von den Unterleisten (5.1, 5.2) entfernbar und an diese annäherbar sind.

2. Spannrahmen nach Anspruch 1, **dadurch gekennzeichnet, dass** die Ober- und die Unterleisten (4.1, 4.2, 5.1, 5.2) sämtlicher Paare (4, 5) Spannbacken (6, 7) haben, die, in der Ebene des einzuspannenden Flächengebildes (8) betrachtet, hintereinanderliegend in derselben Spannebene angeordnet sind.

3. Spannrahmen nach Anspruch 2, **dadurch gekennzeichnet, dass** die Spannbacken gasdicht ausgebidlet und gasdicht ineinander geführt sind.

4. Spannrahmen nach einem der Anprüche 1 bis 3, **dadurch gekennzeichnet, dass** die Oberleisten (4.1, 4.2) um eine horizontales Lager (9) der Unterleisten (5.1, 5.2) schwenkbar sind, um die Spannbacken (6, 7) voneinander zu entfemen oder aneinander anzunähern.

5. Spannrahmen nach Anspruch 4, **dadurch gekennzeichnet, dass** die Oberleisten (4.1, 4.2) durch über die Länge verteilte Kolben- / Zylinderanordnungen (10) der Unterleisten (5.1, 5.2) schwenkbar sind.

6. Spannrahmen nach einem der Ansprüche 1 bis 5, **dadurch gekennzeichnet, dass** wenigstens zwei Klemmschienen (2.1) auf Schlitten (11) festgelegt und in der Ebene des Flächengebildes (8) senkrecht zu ihrer Längserstreckung vor- und zurückbewegbar sind.

7. Spannrahmen nach Anspruch 6, **dadurch gekennzeichnet, dass** die parallel zueinander verschiebbaren Schlitten (11) durch Gewindespindeln (12) verschiebbar sind, und dass die Gewindespindeln (12) in einem den Rahmen (1) tragenden Hilfsrahmen (13) gelagert sind.

8. Spannrahmen nach Anspruch 7, **dadurch gekennzeichnet, dass** die senkrecht zueinander verschiebbaren Schlitten (11, 12) durch separate Antriebe (14.1, 14.2) verschiebbar sind.

9. Spannrahmen nach Anspruch 7 oder 8, **dadurch gekennzeichnet, dass** die parallel zueinander verschiebbaren Schlitten (11.1, 11.2; 12.1, 12.2) durch einen Zentralantrieb verschiebbar sind.

10. Spannrahmen nach einem der Ansprüche 6 bis 9, **dadurch gekennzeichnet, dass** die Schlitten (11.1, 11.2, 12.1, 12.2) durch in dem Hilfsrahmen (13) verschiebbare, vakuumdichte Platten gebildet sind und dass die Platten durch Dichtungen gegenüber dem Hilfsrahmen (13) abgedichtet sind.

## Claims

1. Tenter frame for a thermoforming apparatus, comprising a frame (1) which can be lowered and is variable in its stretching width and stretching length and which has grips surrounding the inner edge and having stretching jaws lying in a common plane for fixing at the edges a planar structure inserted in the frame opening (3), wherein the grips are at least proportionally designed as clamping rails (2) of continuous construction with a clamping length which at least corresponds to the stretching width Sb or stretching length S1 of the plastic film or sheet to be deformed, that at least one clamping rail (2.1) is limited at the ends by two other clamping rails, designed as an extendable telescopic clamping rail (2.3) and adaptable in length to the respective stretching width Sb or stretching length S1 between the other two clamping rails adjoining at the ends, **characterised in that** the telescopic clamping rail (2.3) comprises a first pair (4) and a second pair (5) of clamping strips which are guided in pairs so as to be slidable one inside the other parallel to their longitudinal direction, **in that** each pair (4, 5) of clamping strips comprises an upper strip (4.1, 4.2) and a lower strip (5.1, 5.2) and **in that** the upper strips (4.1, 4.2) can be moved towards and away from the lower strips (5.1, 5.2) together only.

2. Tenter frame according to claim 1, **characterised in that** the upper and lower strips (4.1, 4.2, 5.1, 5.2) of all pairs (4, 5) have stretching jaws (6, 7) which, seen in the plane of the planar structure (8) to be stretched, are arranged one behind the other in the same plane of stretching.

3. Tenter frame according to claim 2, **characterised in that** the stretching jaws are constructed gas-tightly and guided one inside the other gas-tightly.

4. Tenter frame according to any of claims 1 to 3, **characterised in that** the upper strips (4.1, 4.2) are pivotable about a horizontal bearing (9) of the lower strips (5.1, 5.2) in order to move the stretching jaws (6, 7) towards or away from each other.

5. Tenter frame according to claim 4, **characterised in that** the upper strips (4.1, 4.2) are pivotable by piston and cylinder assemblies (10) of the lower strips (5.1, 5.2) which are distributed over the length.

6. Tenter frame according to any of claims 1 to 5, **characterised in that** at least two clamping rails (2.1) are fixed to carriages (11) and can be moved back and forth in the plane of the planar structure (8) perpendicularly to their longitudinal extent.

7. Tenter frame according to claim 6, **characterised in that** the carriages (11), which are slidable parallel to each other, are slidable by threaded spindles (12), and **in that** the threaded spindles (12) are mounted in an auxiliary frame (13) carrying the frame (1).

8. Tenter frame according to claim 7, **characterised in that** the carriages (11, 12), which are slidable perpendicularly to each other, are slidable by separate drives (14.1, 14.2).

9. Tenter frame according to claim 7 or 8, **characterised in that** the carriages (11.1, 11.2; 12.1, 12.2), which are slidable parallel to each other, are slidable by a central drive.

10. Tenter frame according to any of claims 6 to 9, **characterised in that** the carriages (11.1, 11.2, 12.1, 12.2) are formed by vacuum-tight plates slidable in the auxiliary frame (13) and **in that** the plates are sealed off from the auxiliary frame (13) by seals.

## Revendications

1. Cadre de serrage pour une installation de thermoformage, comprenant un cadre (1) susceptible d'être abaissé, dont la largeur de serrage et la longueur de serrage sont modifiables, avec des pinces de serrage entourant le bord intérieur, avec des mâchoires de serrage situées dans un plan commun, pour la fixation, côté bordure, d'une structure plane insérée dans l'ouverture de cadre (3), les pinces de serrage étant réalisées au moins en partie sous forme de glissières de serrage (2) de nature continue, avec une longueur de serrage correspondant au moins à la largeur de serrage Sb ou à la longueur de serrage S1 de la feuille ou plaque de matière synthétique à déformer, au moins une glissière de serrage (2.1), délimitée, côté frontal, par deux autres glissières de serrage, étant réalisée sous la forme de glissière de serrage télescopique (2.3) déployable et adaptable, quant à sa longueur, à la largeur de serrage Sb respective, ou à 1a longueur de serrage S1 respective, entre les deux autres glissières de serrage situées en position limitrophe côté frontal, **caractérisé en ce que** la glissière de serrage télescopique (2.3) comprend une première paire (4) et une deuxième paire (5) de bandes de serrage, guidées, par paires, de manière déplaçables l'une dans l'autre parallèlement à leur direction longitudinale, en ce chaque paire (4, 5) des bandes de serrage comprend une bande supérieure (4.1, 4.2) et une bande inférieure (5.1, 5.2), et **en ce que** les bandes supérieures (4.1, 4.2) ne sont susceptibles d'être éloignées des bandes inférieures (5.1, 5.2) et approchées de celles-ci que conjointement.

2. Cadre de serrage selon la revendication 1, **caractérisé en ce que** les bandes supérieures et inférieures (4.1, 4.2, 5.1, 5.2) de l'ensemble des paires (4, 5) comprennent des mâchoires de serrage (6, 7) qui, en observant dans le plan de la structure plane (8) à enserrer, sont disposées les unes derrière les autres dans le même plan de serrage.

3. Cadre de serrage selon la revendication 2, **caractérisé en ce que** les mâchoires de serrage sont, de par leur réalisation, étanches aux gaz et guidées les unes dans les autres de manière étanche aux gaz.

4. Cadre de serrage selon l'une des revendications 1 à 3, **caractérisé en ce que** les bandes supérieures (4.1, 4.2) sont susceptibles de pivoter autour d'un palier (9) horizontal des bandes inférieures (5.1, 5.2), de manière à éloigner les unes des autres les mâchoires de serrage (6, 7), ou à les approcher les unes des autres.

5. Cadre de serrage selon la revendication 4, **caractérisé en ce que** les bandes supérieures (4.1, 4.2) sont susceptibles de pivoter au moyen d'agencements à piston/cylindre (10), répartis sur la longueur, des bandes inférieures (5.1, 5.2).

6. Cadre de serrage selon l'une des revendications 1 à 5, **caractérisé en ce qu'**au moins deux glissières de serrage (2.1) sont fixées sur des chariots (11) et susceptibles d'être avancées et rétractées par pivotement dans le plan de la structure plane (8), perpendiculairement à leur étendue longitudinale.

7. Cadre de serrage selon la revendication 6, **caractérisé en ce que** les chariots (11), déplaçables parallèlement les uns aux autres, sont déplaçables au moyen de broches filetées (12), et **en ce que** les broches filetées (12) sont montées en palier dans un cadre auxiliaire (13) portant le cadre (1).

8. Cadre de serrage selon la revendication 7, **caractérisé en ce que** les chariots (11, 12), déplaçables perpendiculairement les uns aux autres, sont déplaçables au moyen d'entraînements (14.1, 14.2) séparés.

9. Cadre de serrage selon la revendication 7 ou 8, **caractérisé en ce que** les chariots (11.1, 11.2 12.1, 12.2), déplaçables parallèlement les uns aux autres, sont déplaçables au moyen d'un entraînement central.

10. Cadre de serrage selon l'une des revendications 6 à 9, **caractérisé en ce que** les chariots (11.1, 11.2, 12.1, 12.2) sont formés par des plaques étanches au vide, déplaçables dans le cadre auxiliaire (13), et **en ce que** les plaques sont isolées de manière étanches par rapport au cadre auxiliaire (13) au moyen de joints d'étanchéité.
